Europäisches Patentamt

European Patent Office

Office européen des brevets

(11) Veröffentlichungsnummer: **0 334 333**
**A2**

## EUROPÄISCHE PATENTANMELDUNG

(21) Anmeldenummer: **89105165.8**

(51) Int. Cl.4: **G03B 1/58**

(22) Anmeldetag: **22.03.89**

(30) Priorität: **23.03.88 DD 313921**

(43) Veröffentlichungstag der Anmeldung:
**27.09.89 Patentblatt 89/39**

(84) Benannte Vertragsstaaten:
**CH DE FR GB LI NL**

(71) Anmelder: **VEB DEFA Studio für Spielfilme**
**August-Bebel-Strasse 26-53**
**DDR-1591 Potsdam-Babelsberg(DD)**

(72) Erfinder: **Ristow, Jürgen, Dr.**
**Küsselstrasse 42**
**DDR-1560 Potsdam(DD)**

(74) Vertreter: **Spott, Gottfried, Dr. et al**
**Patentanwälte Spott und Puschmann**
**Sendlinger-Tor-Platz 11**
**D-8000 München 2(DE)**

(54) **Vorrichtung zum selbsttätigen Ein- und Auslegen eines Kinefilmes.**

(57) Die Erfindung betrifft eine Vorrichtung zum selbsttätigen Ein- und Auslegen eines Kinefilmes und zur Filmschleifenbildung in einem im Normallauf und im schnellen Vor- und Rücklauf betriebenen Filmprojektor mit Schrittschaltgetriebe, bei dem der Kinefilm (0) während des Schnelllaufes von einer Schaltrolle (11) getrennt und bei geöffneter Bildbühne (17) über eine Vor- und eine Nachwickelrolle (3 bzw. 4) gespannt durch Wickeleinrichtungen (1;2) transportierbar und abschnittsweise durch Filmlängenzählung gesteuerten Rangierbetrieb auf Vor- und Rücklauf umsteuerbar ist. Anwendung finden derartige Filmprojektoren vorwiegend bei der schleifenlosen Synchronisation und in Mischprozessen von Filmen. Die wesentlichen Merkmale der Erfindung liegen in der Ausbildung der Funktionselemente des Filmprojektors für den Bild- und Sperrabgleich und zur Filmschleifenbildung, die ein bildstrich- und perforationsgenaues Aufsetzen des Kinefilmes vor seinem Normallauf auf die Schaltrolle (11) ermöglichen. Dabei werden durch die Erfindung die an sich übliche Bildung einer Toleranzkette minimiert und erhebliche Fertigungsvorteile erzielt.

Fig. 1

## Vorrichtung zum selbsttätigen Ein- und Auslegen eines Kinefilmes in einem Filmprojektor

Die Erfindung betrifft eine Vorrichtung zum selbsttätigen Ein-und Auslegen eines Kinefilmes und zur Filmschleifenbildung in einem im Normallauf und im schnellen Vor- und Rücklauf betriebenen Filmprojektor mit Schrittschaltgetriebe, bei dem der Kinefilm während des Schnellaufes von einer Schaltrolle getrennt und bei geöffneter Bildbühne über eine Vor- und eine Nachwickelrolle gespannt durch Wickeleinrichtungen transportierbar und abschnittsweise durch einen mittels Filmlängenzählung gesteuerten Rangierbetrieb auf Vor- und Rücklauf umsteuerbar ist, bestehend aus automatischen, von der Filmlängenzählung gesteuerten und vor der Phase des Normallaufes wirkenden Abgleicheinrichtungen für die Lage eines Filmbildes und der Filmperforation vor einem Bildfenster und den Zähnen der Schaltrolle. Anwendung finden derartige Filmprojektoren vorzugsweise bei der schleifenlosen Synchronisation und in solchen Filmbearbeitungsprozessen, bei denen eine bestimmte Filmszene im schnellen Suchlauf erreicht werden soll oder in denen ein schneller Filmrücklauf zu einem bestimmten Szenenanfang oder zum Anfang des Filmes erforderlich ist, beispielsweise in Synchronisations- und Mischprozessen.

Es ist eine Vorrichtung zum Transportieren und Führen von Kinefilmen in Filmprojektoren bekannt, die eine feste Filmbühne und gegen diese bewegbare und andrückbare Filmandruckkufen zur vereinfachten Umstellung zwischen Vorführ- und Schnellaufbetrieb zur automatischen Schleifenbildung und für einen gradlinigen Verlauf des Filmes zwischen den Wickeleinrichtungen im Schnellauf besitzt (DE-OS 31 27 778). Bei dieser Lösung sind Filmandruckkufen, Andruckrollen und Schleifenbildner auf einem Schlitten angeordnet und durch diesen steuerbar. Diese Erfindung enthält jedoch keine Lösung für das bildgenaue Einlegen des Filmes in das Bildfenster und das perforationspräzise Aufsetzen des Kinefilmes auf die Schaltrolle des Filmprojektors.
Ein solcher Filmprojektor mit Malteserkreuzantrieb und mit während der Schnellaufphase von der Schaltrolle getrenntem Film ist auch aus der DD-PS 146 110 bekannt.
Um einen automatisierten Betriebsablauf für diesen Filmprojektor zu erreichen, ist zwischen einer dem Filmtransport dienenden Laufwerksebene und einer den Antriebsmotor aufnehmenden Getriebeebene eine zur automatischen Steuerung von Funktionselementen in der Laufwerksebene dienende Schaltebene angeordnet, deren einzelne, als programmierte Folgesteuerung arbeitende Schaltglieder jeweils auf der Laufwerksebene liegende Funktionselemente des Filmtransportes, der Filmführung, der Blendensteuerung und des Bildabgleiches zugeordnet sind, die in Abhängigkeit von zu schaltenden Funktionen im Normallauf und im schnellen Vor- und Rücklauf gesteuert werden. In der Normallaufphase wird der Film von einem Abwickler über eine Vorwickelrolle durch die geschlossene Bildbühne, in Kontakt mit der Schaltrolle, über eine Nachwikkelrolle zum Aufwickler transportiert, wobei zwischen Vorwickelrolle und Bildbühne und zwischen Schaltrolle und Nachwickelrolle jeweils Filmschleifen gebildet werden, die die intermittierende Filmfortschaltung ausgleichen. Während der Schnellaufphase wird der Film von der Schaltrolle abgehoben und läuft bei geöffneter Bildbühne geradlinig geführt nur über die Vorwickelrolle und die Nachwickelrolle und erfährt seinen Bewegungsantrieb von den Wickelmotoren am Aufwickler oder Abwickler.

Die bekannten Lösungen für eine schleifenlose Synchronisation setzen voraus, daß ein Filmprojektor in der Lage ist, einen Film innerhalb wählbarer und programmierbarer Takegrenzen im Normallauf zu projizieren und nach Erreichen des Takeendes mit gegenüber dem Normallauf erhöhter Geschwindigkeit zum Takeanfang zurückzufahren und dort wieder mit der Projektion im Normallauf zu beginnen (J.Webers: Bild und Ton synchron; Franzis-Verlag München, 1976, S. 223-225; S.König "Auto-Loop" - ein neuartiges Ton-Nachsynchronisationsverfahren, Fernseh- und Kino-Technik, München 8/1972, S.277-279; A New Electronic Post-Synchronization System, American Cinemat., 49 (1968) 10, S. 748-750). Das selbsttätige Auffinden der Takegrenzen, also von Takeanfang und Takeende erfolgt mit Mitteln der digitalen Zähltechnik (DE-OS 28 49 218), wobei als Führungsgröße die Anzahl der Perforationslöcher eines Filmes fotoelektrisch abgetastet wird (J.Webers, o.a.O., S. 168, 223, 225). Eine wesentliche Voraussetzung für solche bekannte Verfahren ist bisher die Verwendung eines Filmprojektors, der ähnliche Eigenschaften wie ein Magnetfilmgerät aufweist und bei dem der Filmtransport nicht intermittierend sondern kontinuierlich erfolgt. Wird, wie bereits beschrieben, ein mit Schrittschaltgetriebe betriebener Filmprojektor für die Zwecke der schleifenlosen Synchronisation eingesetzt, bei dem der Film während der Schnellaufphase von der Schaltrolle abgehoben ist, ergeben sich bei der Automatisierung dieses Projektors besondere Probleme dadurch, daß der Film nach allen Umschaltphasen wieder bildschrittgenau in eine projektionsgerechte Stellung im Projektor gebracht werden muß. Der Film muß also für die Vorbereitung auf Normallauf mit seiner Perforation wieder exakt auf die Schaltrolle aufgesetzt werden, ohne daß eine manuelle Bildstrichverstellung im Bildfenster erforderlich wird.

Zur Automatisierung eines solchen Filmprojektors, bei dem in jeder Phase der Laufwerksumschaltung eine selbsttätige bildschrittgenaue Positionierung des Kinefilmes erreicht wird, um ihn in einer definierten Stellung der Schaltrolle von ihr abzuheben und nach dem Schnellauf wieder mit ihr so zu verbinden, daß eine exakte Bildlage in allen Betriebsarten des Filmprojektors erreicht wird, ist aus einem Verfahren zur automatischen Steuerung von Funktionselementen eines Filmprojektors bekannt (DD-PS 15 32 50). Die Lösung liegt hierbei in der Ableitung von Schaltimpulsen aus der Perforationslochzählung und deren Zuordnung zum Bildstrich in Verbindung mit einer aus der Abtastung der Winkelstellung der An triebswelle des Malteserkreuzes abgeleiteten Schaltimpulsbildung und deren Verknüpfung untereinander, die Positionierungsvorgänge des Kinefilmes und die Fixierung der Schaltrollenstellung ermöglicht. Hierbei ist ein erheblicher Aufwand für die elektronische Steuerung erforderlich. Die eingesetzten Mittel des Standes der Technik verlangen eine Präzision, die in der Fertigung schwer realisierbar ist, wobei sich auch durch die Hintereinanderschaltung unterschiedlicher Wirkungsprinzipen und der verschiedenen Meß- und Wandlungsprozesse in der Signalverarbeitung eine Toleranzkette aufbaut, die zu erheblichen Abgleichfehlern führt. Dem Stand der Technik haftet besonders der Mangel an, daß die Funktionselemente für die Schleifenbildung, bei der es gar nicht auf solch hohe Präzision ankommt, mit fertigungstechnisch schwer realisierbaren Elementen erfolgt. Aufgabe der Erfindung ist die Entwicklung einer Vorrichtung zum selbsttätigen Ein- und Auslegen eines Kinefilmes und zur Filmschleifenbildung in einem im Normallauf und im schnellen Vor-und Rücklauf betriebenen Filmprojektor mit Schrittschaltgetriebe, bei dem der Kinefilm während des Schnellaufes von einer Schaltrolle getrennt und bei geöffneter Bildbühne über eine Vorwickelrolle und eine Nachwickelrolle gespannt durch Wickeleinrichtungen, transportierbar und abschnittsweise durch Filmlängenzählung gesteuertem Rangierbetrieb auf Vor- und Rücklauf umsteuerbar ist, wobei durch die Erfindung die Toleranzkette durch den Einsatz entsprechender, in der Fertigung besser beherrschbarer, technischer Mittel minimiert werden soll.

Erfindungsgemäß wird die Aufgabe dadurch gelöst, daß eine Vorwickelrolle zur Erzielung eines Bildabgleiches fest mit einem steuerbaren und einem einen Bildstrich fixierenden Klinkenrad verbunden ist. Ein mit einer Schaltrolle verbundenes Schrittschaltgetriebe ist zur Erzielung eines Sperrabgleiches im Stillstand des Filmprojektors in einer definierten Sperrstellung haltbar, um ein perforationsgenaues Aufsetzen des Kinefilmes auf die Schaltrolle vor Beginn des Normallaufes zu sichern. Die Vorwickel rolle, das Schrittschaltgetriebe und eine Nachwickelrolle sind über Schaltkupplungen, vorzugsweise Magnetkupplungen in Abhängigkeit von einer Filmlängenzählung und der Betriebsart des Filmprojektors nacheinander und für den Normallauf an einen Projektorantrieb schaltbar. Die Nachwickelrolle ist durch eine mit ihr verbundene, über eine Schaltkupplung wirkende, schaltbare Bremse bis zum Zeitpunkt der Einschaltung der Nachwickelrolle fixierbar. Vorzugsweise ist die Vorwickelrolle formschlüssig mit dem Klinkenrad verbunden, gegen dessen Rasten ein gegen die Wirkung einer Feder durch einen Elektromagneten bis zur Fixierung des Kinefilms im Bildfenster betätigbarer Stößel einschaltbar ist. Der Abstand jeweils benachbarter Rasten des Klinkenrades entspricht dem Abstand benachbarter Bildstriche auf dem Kinefilm.

Das mit der Schaltrolle verbundene Schrittschaltgetriebe ist zur Erzielung eines Sperrabgleiches im Stillstand vorzugsweise durch eine Feder in Sperrstellung zieh- und haltbar.

Vorzugsweise ist die Filmlängenzählung unmittelbar mit der Vorwickelrolle verbunden und erfolgt über einen mit ihr gekoppelten Fotogeber.

Die erfindungsgemäße Vorrichtung ermöglicht eine Reduzierung des Fertigungsaufwandes unter Beibehaltung bzw. Erhöhung der Präzision für den erforderlichen und störungsfreien Bild- und Sperrabgleich im automatischen Rangierbetrieb unter Studiobedingungen.

Die Erfindung soll nachfolgend an einem Ausführungsbeispiel erläutert werden. In der Zeichnung zeigen

Fig.1: eine Gesamtdarstellung des Antriebs- und Schleifenbildungssystems eines Filmprojektors;

Fig.2: eine Darstellung des Sperrabgleiches am Schrittschaltgetriebe;

Fig .3: eine Darstellung des Bildabgleichs an der Vorwickelrolle

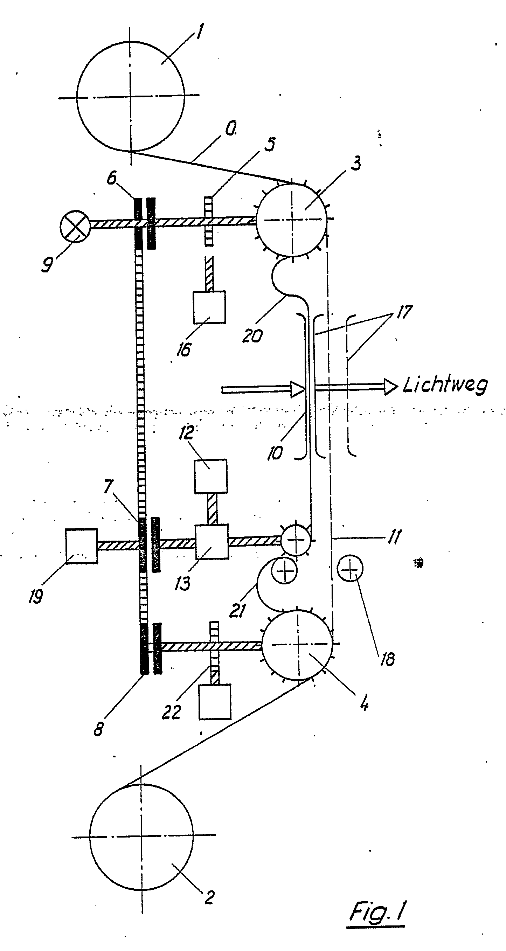

Ein Kinefilm 0 wird entsprechend Fig.1 (gestrichelte Darstellung) zwischen einen oberen Wickel 1 und einem unteren Wickel 2 über eine Vorwickelrolle 3 und eine Nachwickelrolle 4 in einen Filmprojektor eingelegt. Dabei wird durch Beachtung einer Markierung auf der Vorwickelrolle 3 dafür gesorgt, daß der Bildstrich immer mit einer Raste 23 eines mit der Vorwickelrolle 3 fest verbundenen Klinkenrades korrespondiert. Mit der Vorwickelrolle 3, einem Schrittschaltgetriebe 13 und der Nachwickelrolle 4 verbundene Schaltkupplungen, vorzugsweise Magnetkupplungen 6; 7 und 8 sind geöffnet. In dieser Stellung kann der Film ohne Behinderung beliebig mit hoher Geschwindigkeit vor und zurück bewegt werden. Seine Lage wird dabei ständig durch einen mit der Vorwickelrolle 3 fest verbundenen Fotogeber 9 registriert.

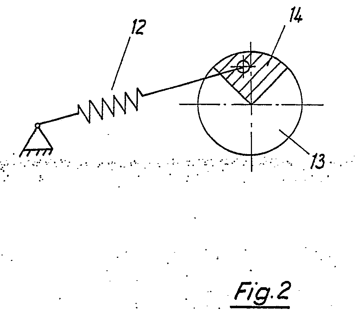

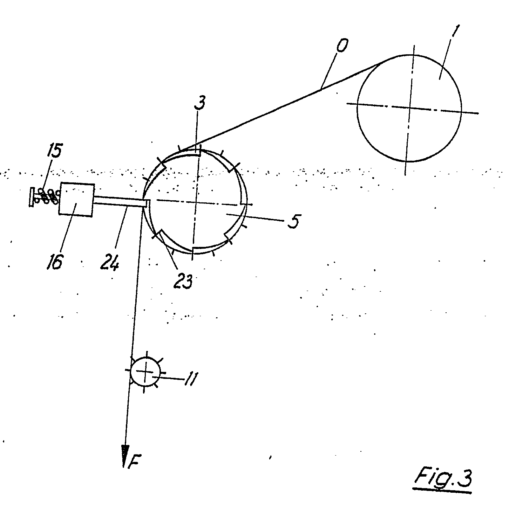

Für den Normallauf (Vorführungsbetrieb) muß zunächst der Kinefilm 0 so justiert werden, daß ein Bild genau in einem Bildfenster 10 steht und die Perforation des Kinefilmes 0 exakt vor den Zähnen einer Schaltrolle 11 positioniert wird. Zu diesem Zweck wird mittels einer Feder 12 in Fig. 2 dafür gesorgt, daß ein Schrittschaltgetriebe 13 im Stillstand immer in Sperrstellung steht, d.h. den in Fig. 2 schraffiert gezeichneten Bereich 14 - Bewegungsbereich - verläßt. Dieser Vorgang wird als Sperrabgleich bezeichnet.

Ferner wird zur Vorbereitung des Normallaufes durch kurzzeitige Erhöhung des Filmzuges am unteren Wickel 2 dafür gesorgt, daß das Klinkenrad 5, das mit der Vorwickelrolle 3 und damit mit dem Kinefilm 0 formschlüssig verbunden ist, gegen einen nur zu diesem Zweck gegen die Feder 15 aktiven Elektromagneten 16 bzw. dessen Stößel 24 gezogen wird. Dadurch erhält der Kinefilm 0 die gegenüber Bildfenster 10 und Schaltrolle 11 notwendige Lage. Dieser Vorgang wird als Bildabgleich bezeichnet.

Die Bildbühne 17 wird geschlossen und die Andruckrolle 18 an die Schaltrolle 11 geführt. Damit ist der Film fixiert. Der Magnet 16 fällt ab und gibt das Klinkenrad 5 frei. Der Antrieb 19 wird eingeschaltet. Durch Aktivierung der Kupplung 6 wird die Vorwickelrolle 3 in Transportrichtung bewegt. Es bildet sich die obere Schleife 20. Ihre Länge wird mittels Fotogeber 9 durch Impulszählung ermittelt. Nach hinreichender Länge der Schleife 20 wird durch Betätigung der Kupplung 7 über das Schrittschaltgetriebe 13 die Schaltrolle 11 bewegt. Es bildet sich die untere Schleife 21. Damit diese Schleife nicht durch den Wickelzug des unteren Wickels 2 weggezogen werden kann, wird die Nachwickelrolle 4 durch eine elektromagnetisch betätigte Bremse 22 bis zur Einschaltung der Kupplung 8 fixiert. Die Länge der Schleife 21 wird ebenfalls über den Fotogeber 9 durch Impulszählung ermittelt. Wenn die Schleife 21 hinreichend lang ist, wird die Kupplung 8 betätigt. Damit ist der Film für die Vorführung transportbereit. Dieser Vorgang wird Schleifenbildung genannt.

Nach Ablauf der Vorführung und Stillsetzung des Antriebes 19 werden die Kupplungen 6; 7 und 8 geöffnet. Die Schleifen 20 und 21 können dadurch über die Wickelzüge der Wickel 1 und 2 herausgezogen werden. Die Filmbühne 17 und die Andruckrolle 18 werden in ihre - gestrichelt gezeichnete - Ausgangsposition geführt, und der Kinefilm 0 nimmt selbsttätig die für den Schnellauf günstige, gestreckte Lage zwischen Vorwickelrolle 3 und Nachwickelrolle 4 ein.

Die Vorteile der Erfindung liegen in der fertigungstechnisch besser realisierbaren Herstellung der einzelnen Funktionselemente für derartige Filmprojektoren bei gleichzeitiger Minimierung der Toleranzkette, deren Mindestmaß eine wesentliche Voraussetzung für eine einwandfreie und automatische Betriebsfunktion von Filmprojektoren im Rangierbetrieb ist.

## Ansprüche

1. Vorrichtung zum selbsttätigen Ein- und Auslegen eines Kinefilmes und zur Filmschleifenbildung in einem im Normallauf und im schnellen Vor- und Rücklauf betriebenen Filmprojektor mit Schrittschaltgetriebe, bei dem der Kinefilm während des Schnellaufes von einer Schaltrolle getrennt und bei geöffneter Bildbühne über eine Vorwickelrolle und eine Nachwickelrolle gespannt durch Wickeleinrichtungen transportierbar und abschnittsweise durch einen mittels Filmlängenzählung gesteuerten Rangierbetrieb auf Vor- und Rücklauf umsteuerbar ist, bestehend aus automatischen, von der Filmlängenzählung gesteuerten und vor der Phase des Normallaufes wirkenden Abgleicheinrichtungen für die Lage eines Filmbildes und der Filmperforation vor einem Bildfenster und den Zähnen der Schaltrolle, dadurch gekennzeichnet, daß die Vorwickelrolle (3) zur Erzielung eines Bildabgleiches fest mit einem ansteuerbaren und einem einen Bildstrich fixierenden Klinkenrad (5) verbunden ist, daß das mit der Schaltrolle (11) verbundene Schrittschaltgetriebe (13) zur Erzielung eines Sperrabgleiches im Stillstand in einer definierten Sperrstellung haltbar ist, daß die Vorwickelrolle (3), das Schrittschaltgetriebe (13) und die Nachwickelrolle (4) über Schaltkupplungen (6;7;8) in Abhängigkeit von der Filmlängenzählung (9) und der Betriebsart des Filmprojektors nacheinander und für den Normallauf an einen Projektorantrieb (19) schaltbar sind und daß die Nachwickelrolle (4) durch eine mit ihr verbundene, über eine Schaltkupplung (8) wirkende, schaltbare Bremse (22) fixierbar ist.

2. Vorrichtung nach Anspruch 1, dadurch gekennzeichnet, daß die Vorwickelrolle (3) formschlüssig mit einen Klinkenrad (5) verbunden ist, gegen dessen Rasten (23) ein gegen die Wirkung einer Feder (15) durch einen Elektromagneten (16) bis zur Fixierung des Kinefilmes (0) in einem Bildfenster (10) betätigbarer Stößel (24) einschaltbar ist, wobei der Abstand jeweils benachbarter Rasten (23) des Klinkenrades (5) dem Abstand benachbarter Bildstriche auf dem Kinefilm (0) entspricht.

3. Vorrichtung nach Anspruch 1, dadurch gekennzeichnet, daß das mit der Schaltrolle (11) verbundene Schrittschaltgetriebe (13) zur Erzielung eines Sperrabgleiches im Stillstand durch eine Feder (12) in Sperrstellung ziehbar und haltbar ist.

4. Vorrichtung nach Anspruch 1, dadurch gekennzeichnet, daß die Filmlängenzählung (9) über einen Fotogeber (9) mit der Vorwickelrolle (3) verbunden ist.

Fig. 1

_Fig.2_

_Fig.3_